# EUROPÄISCHE PATENTSCHRIFT

(11) **EP 3 033 464 B1**
(45) Veröffentlichungstag und Bekanntmachung des Hinweises auf die Patenterteilung: **02.01.2019**
(21) Anmeldenummer: 14733594.7
(22) Anmeldetag: 23.06.2014
(51) Int. Cl.: E05C 19/02, B60N 3/10, B60R 7/04

(54) **EINRICHTUNG MIT EINEM "PUSH-PUSH"-MECHANISMUS**
DEVICE WITH PUSH-PUSH MECHANISM
DISPOSITIF AVEC MÉCANISME PUSH-PUSH

(30) Priorität: 14.08.2013 DE 102013108794
(43) Veröffentlichungstag der Anmeldung: 22.06.2016
(73) Patentinhaber: Dr. Schneider Kunststoffwerke GmbH, 96317 Kronach (DE)
(72) Erfinder: MICHEL, Timo, 96365 Nordhalben (DE)
(86) Internationale Anmeldenummer: PCT/EP2014/063160
(87) Internationale Veröffentlichungsnummer: WO 2015/022106

(56) Entgegenhaltungen:
- WO-A1-2011/052740
- WO-A1-2013/022907
- DE-A1- 10 211 124
- FR-A- 1 588 802
- US-A1- 2007 046 037

## Beschreibung

Die vorliegende Erfindung betrifft eine Einrichtung, aufweisend einen Mechanismus zum Verbringen einer Komponente aus einem geöffneten in einen geschlossen Zustand und umgekehrt durch Drücken auf die Komponente. Ein derartiger Mechanismus ist auch als "Push-Push"-Mechanismus bekannt.

Ein "Push-Push"-Mechanismus wird bei Komponenten verwendet, welche durch Drücken auf die Komponente beispielsweise ein Fach öffnen oder schließen sollen. Ein "Push-Push"-Mechanismus wird in der Regel mit einem Haken realisiert, wobei der Haken entlang einer Führung eine Ausnehmung hintergreift und damit das Fach verschließt oder sich herausbewegt und damit das Fach freigibt.

Aus DE 102 11 124 A1 ist beispielsweise eine Schminkspiegelleuchte zum Einbau in ein Fahrzeugdach bekannt, welche eine Spiegelklappe und ein Gehäuseteil aufweist. Die Spiegelklappe ist mittels einer Schwenklagerung an dem Gehäuseteil aus einer ausgeschwenkten Gebrauchsstellung in eine eingeschwenkte Ruhestellung gegen die Rückstellkraft ihrer Gewichtskraft verstellbar angeordnet. Zum verriegelten Halten der Spiegelklappe in Ruhestellung ist eine Verriegelungseinrichtung vorgesehen, welche ein Arretierelement mit einem Riegel aufweist, der entlang einer Rastkurvenbahn bewegbar und in eine Raststellung bringbar ist. Die Verriegelungseinrichtung hat ferner an der einen Baugruppe einen quer oder senkrecht zur Einführrichtung des Führungsnockens verschiebbaren Querschieber. Die Rastkurvenbahn ist an dem Querschieber angeordnet und als randoffene Herzkurve mit einer der anderen Baugruppe zugewandten Einführöffnung für den Riegel ausgebildet.

WO 2013/022907 A1 offenbart einen Druckverriegelungsmechanismus mit einem Gehäuse und einem Verriegelungskörper, der relativ zu dem Gehäuse beweglich ist und eine Bahn aufweist. Ein Mitnehmer ist in einem Gehäuseschlitz angeordnet, wobei der Mitnehmer mit einem Zapfen verbunden ist, der sich von dem Mitnehmer nach außen erstreckt und in Eingriff mit der Bahn steht, so dass der Zapfen sich längs der Bahn bewegt, während der Mitnehmer sich längs des Schlitzes bewegt. Eine Vorspannfeder kann zwischen einem Gegengewicht und einer Rotationsachse für einen schwenkbaren Hammer so angeordnet sein, dass die Vorspannfeder den Hebelarm und das Gegengewicht zum Verriegelungskörper hin drängt.

Bei den aus dem Stand der Technik bekannten Einrichtungen mit einem "Push-Push"-Mechanismus wird ein Arretierelement, welches an einem ersten Bauteil angeordnet ist, in einer Herzkurve geführt, welche an einem zweiten Bauteil angeordnet ist. Das Arretierelement entspricht daher im Wesentlichen einem Haken, der eine Ausnehmung hintergreift, um zumindest das erste oder zweite Bauteil in der verschlossenen Stellung zu halten.

Diese aus dem Stand der Technik bekannten Arten des Aufbaus eines "Push-Push"-Mechanismus weisen Nachteile in Bezug auf den Aufbau, den benötigten Bauraum und die Anfälligkeit für Beschädigungen auf. Arretierelemente sowie Haken können leicht bei mehrmaligem Betätigen brechen. Ferner muss ein ausreichender Bauraum für den Haken oder das Arretierelement bei einem "Push-Push"-Mechanismus bereitgestellt werden, was sich ebenso nachteilig in Bezug auf die Kosten hierfür auswirkt.

Aufgabe der vorliegenden Erfindung ist es daher, eine Einrichtung mit einem Mechanismus zum Verbringen einer Komponente aus einem geöffneten in einen geschlossenen Zustand und umgekehrt anzugeben, wobei die Einrichtung einen geringen Bauraum benötigt und zuverlässig ein Verriegeln und Entriegeln bereitstellt.

Erfindungsgemäß wird die Aufgabe durch eine Einrichtung mit den in Anspruch 1 angegebenen technischen Merkmalen gelöst.

Vorteilhafte Weiterbildungen der Erfindung sind in den Unteransprüchen im Detail angegeben.

Bei einer Einrichtung, aufweisend einen Mechanismus zum Verbringen einer Komponente aus einem geöffneten in einen geschlossenen Zustand und umgekehrt durch Drücken auf die Komponente, sind eine Aufnahme, eine Komponentenaufnahme und ein Verriegelungsteil vorgesehen, welches
in der Aufnahme verschieblich gelagert und in einem geöffneten Zustand der Komponente um eine erste Weite aus der Aufnahme hervorsteht und in einem geschlossenen Zustand um eine zweite Weite aus der Aufnahme hervorsteht und in der Komponentenaufnahme aufgenommen ist, wobei die zweite Weite größer ist als die erste Weite, wobei das Verriegelungsteil gegen die Kraft einer Federeinrichtung in der Aufnahme aufgenommen ist und das Verriegelungsteil eine Herzkurve aufweist, in welcher ein Führungselement verschieblich gelagert ist, welches quer zu der Verschieberichtung des Verriegelungsteils verlagerbar ist, und wobei das Verriegelungsteil an der der Aufnahme abgewandten Seite eine Schräge und die Komponentenaufnahme eine korrespondierende Schräge aufweisen, welche im geschlossenen Zustand der Komponente aneinander anliegen und zueinander verschieblich sind, wobei eine erste Kante der Komponentenaufnahme versetzt zu einer zweiten Kante der Komponentenaufnahme verläuft.

Die Einrichtung weist gegenüber bekannten "Push-Push"-Mechanismen den Vorteil auf, dass sie nur einen geringen Bauraum benötigt. Im Gegensatz zu bekannten Einrichtungen ist an der Komponente, welche verschwenkt oder anderweitig geöffnet wird, kein ab- oder vorstehendes Teil angeordnet, welches in eine Verriegelungseinrichtung eingreift. Die Komponente weist lediglich eine Komponentenaufnahme auf, welche eine Schräge besitzt. Die Komponentenaufnahme weist eine erste Kante und eine zweite Kante auf, von welchen sich die Komponentenaufnahme in die Komponente hinein erstreckt. Hierbei verlaufen die erste Kante und die zweite Kante versetzt zueinander, so dass das Verriegelungsteil im geschlossenen Zustand der Komponente bei einem Druck auf die Komponente über die erste Kante, die weiter in Richtung des Verriegelungsteils hervorsteht als die zweite Kante, in die Aufnahme verbracht wird, wobei das Verriegelungsteil über die Herzkurve in einer Position gehalten wird, in der das Verriegelungsteil um eine erste Weite aus der Aufnahme hervorsteht. Danach kann die Komponente geöffnet werden, da das Verriegelungsteil nur um die erste Weite aus der Aufnahme hervorsteht, welche eine Verlagerung der Komponente ermöglicht, da das Verriegelungsteil in dieser Position nicht in Anlage mit der zweiten Kante kommt, die weniger weit in Richtung des Verriegelungsteils aus der Aufnahme hervorsteht als die erste Kante. Um die Komponente zu verschließen, wird die Komponente in Richtung des Verriegelungsteils bewegt. Die zweite Kante der Komponente passiert das Verriegelungsteil, ohne das Verriegelungsteil zu berühren, da das Verriegelungsteil nur um die erste Weite aus der Aufnahme hervorsteht und die zweite Kante einen größeren Abstand zu der Aufnahme und dem Verriegelungsteil aufweist als die erste Kante. Die erste Kante drückt beim Passieren des Verriegelungsteils das Verriegelungsteil weiter in die Aufnahme hinein, wobei über die Herzkurve das Verriegelungsteil entriegelt wird und über die Federeinrichtung aus der Aufnahme herausbewegt wird. Nachdem die erste Kante das Verriegelungsteil passiert hat, wird kein Druck mehr auf die Komponente ausgeübt, so dass das Verriegelungsteil in die Komponentenaufnahme bewegt wird und die Komponente verriegelt.

Das Verriegelungsteil, welches eine korrespondierende Schräge zur Schräge der Komponentenaufnahme aufweist, wird zum Verbringen in den geöffneten Zustand der Komponente in die Aufnahme geschoben und zum Verriegeln der Komponente greift das Verriegelungsteil in die Komponentenaufnahme, wobei die beiden Schrägen aneinander anliegen. Wird im geschlossenen Zustand der Komponente ein Druck auf die Komponente, im Wesentlichen im Bereich der Komponentenaufnahme, ausgeübt, so gleitet das Verriegelungsteil entlang der Schräge der Komponentenaufnahme in die Aufnahme hinein, bis die Komponente von dem Verriegelungsteil nicht mehr gehalten wird. Nachdem die Komponente in den geöffneten Zustand verbracht worden ist, steht das Verriegelungsteil um eine erste Weite aus der Aufnahme hervor. Während des Verbringens der Komponente in den geöffneten Zustand gibt es zumindest einen Zustand, in welchem das Verriegelungsteil fast vollständig in der Aufnahme aufgenommen ist. Nachdem sich die Komponentenaufnahme und die Komponente nicht mehr im Bereich des Verriegelungsteils befinden, erfolgt durch die Federeinrichtung eine Bewegung des Verriegelungsteils mindestens so weit, dass dieses um ein bestimmtes Maß aus der Aufnahme hervorsteht. Die Weiten, um welche das Verriegelungsteil aus der Aufnahme hervorsteht, werden durch das Führungselement und die Herzkurve festgelegt. Die Herzkurve weist dazu Bereiche auf, in welchen das Führungselement in verschiedenen Stellungen gehalten werden kann. Dadurch wird die Position des Verriegelungsteils festgelegt. Beim Schließen der Komponente wird die Komponente wieder in Richtung des Verriegelungsteils bewegt. Hierbei passiert die Komponente das Verriegelungsteil, bis die erste Kante das Verriegelungsteil in die Aufnahme drückt, das Verriegelungsteil entriegelt wird und das Verriegelungsteil über die Federeinrichtung aus der Aufnahme in die Komponentenaufnahme gedrückt wird. Anschließend wird die Komponente in diesem verriegelten Zustand durch das Verriegelungsteil gehalten. Wird erneut ein Druck auf die Komponente ausgeübt, so wird das Verriegelungsteil in die Aufnahme geschoben und die Komponente freigegeben.

Um eine derartige Bewegung sicherstellen zu können, ist bei der vorliegenden Erfindung nicht nur die Herzkurve, welche auf einer Oberseite in das Verriegelungsteil eingebracht ist, verschieblich, sondern auch das Führungselement. Die Schräge der Komponentenaufnahme und die Schräge des Verriegelungsteils sind so ausgebildet, dass die Schräge des Verriegelungsteils, insbesondere in Richtung der Komponente im geöffneten Zustand hin, abnimmt und die Schräge der Komponentenaufnahme in Richtung des Verriegelungsteils entsprechend der Ausgestaltung der Schräge des Verriegelungsteils zunimmt.

Die Einrichtung kann ferner eine quer zu der Verschieberichtung des Verriegelungsteils verlaufende Führung aufweisen, in welcher das Führungselement verschiebbar ist. Die Führung stellt sicher, dass das Führungselement bei der Verlagerung quer zu der Verschieberichtung des Verriegelungsteils nicht verkantet und die Einrichtung blockiert.

Das quer zu der Verschieberichtung des Verriegelungsteils verschiebbare Führungselement erlaubt eine Ausgestaltung der Einrichtung, wobei das Verriegelungsteil nur entlang einer Verschieberichtung bewegt wird und die Seiten des Verriegelungsteils an den Seitenwänden, welche die Aufnahme begrenzen und definieren, anliegen.

Die Federeinrichtung kann mindestens eine Druckfeder aufweisen. Jedoch können im Sinne der Erfindung auch andere Federeinrichtungen verwendet werden, welche bestrebt sind, das Verriegelungsteil aus der Aufnahme zu drücken.

In weiterer alternativer Ausgestaltung weist die Federeinrichtung mindestens zwei Dauermagnete auf, wobei ein Dauermagnet in der Aufnahme und der andere Dauermagnet an dem Verriegelungsteil angeordnet und die Dauermagnete so zueinander ausgerichtet sind, dass sie sich abstoßen. Eine derartige Ausführung umfasst daher zwei Dauermagnete, welche die Aufgabe der Federeinrichtung übernehmen.

Die Einrichtung kann in weiteren Ausführungsformen einen Elektromagneten aufweisen, wobei das Verriegelungsteil aus einem magnetischen Metall besteht und das Verriegelungsteil durch den Elektromagneten in die Aufnahme bewegbar ist, wenn der Elektromagnet aktiviert ist. Bei dieser Ausführung kann ein Öffnen und Schließen der Komponente bzw. ein Verbringen der Komponente in den geöffneten und geschlossenen Zustand elektrisch erfolgen. So kann ein Bedienelement betätigt oder eine andere Steuereinrichtung bedient werden, welche eine Verlagerung des Verriegelungsteils aufgrund des Elektromagneten gegen die Kraft einer Feder (Federeinrichtung) bewirken. Diese Ausgestaltungen bieten ferner den Vorteil, dass selbst bei einem Ausfall der Steuereinrichtungen oder der Stromversorgung ein Öffnen und Schließen bzw. ein Verbringen in den geöffneten und geschlossenen Zustand der Komponente möglich sind, da durch Drücken auf die Komponente, insbesondere im Bereich der Komponentenaufnahme, das Verriegelungsteil in die Aufnahme verschiebbar ist (bei einem Verbringen im geöffneten Zustand; oder aus der Aufnahme heraus bewegbar, zum Verbringen in den geöffneten Zustand), da keine Kraft mehr durch den Elektromagneten wirkt und die Federeinrichtung eine derartige Bewegung bzw. Betätigung zulässt. Die Einrichtung kann somit auch als Sicherheitseinrichtung mit einem stromlos betreibbaren Mittel zum Öffnen und Schließen einer Vorrichtung Verwendung finden. Es ist aber auch möglich, eine Vorrichtung im geschlossenen Zustand über den Elektromagneten zu verriegeln, so dass die Vorrichtung nicht geöffnet werden kann.

In weiteren Ausführungsformen ist das Führungselement ein Stift. Ein erstes Ende des Stiftes ist in der Herzkurve und das zweite Ende des Stiftes ist in der querverlaufenden Führung verschieblich gelagert.

Alternativ kann das Führungselement jedoch auch als Kugel ausgebildet sein, wobei entsprechend der gewählten Ausführungsform die Führung und die Herkurve entsprechend ausgebildet sind. Ein Führungselement, welches als Kugel ausgebildet ist, weist gegenüber anderen Formen den Vorteil auf, dass die Reibung deutlich reduziert ist. Weiterhin ist es auch möglich, eine Herzkurve und ein entsprechendes Führungselement auf beiden Seiten des Verriegelungsteils vorzusehen. Sind in derartigen Ausführungen beide Führungselemente beispielsweise Metallkugeln und ist das Verriegelungsteil ebenfalls aus Metall gefertigt, ergeben sich Anwendungsgebiete für erfindungsgemäße Einrichtungen, welche bisher mit Systemen, welche eine Herzkurve umfassen, nicht realisiert werden konnten. Hierzu sind beispielsweise Türverschlüsse zu nennen. Derartige Systeme sind dabei sehr robust. Es können anstelle von Metallen für die Bestandteile der Einrichtung auch andere Werkstoffe verwendet werden.

Bei weiteren Ausführungsformen kann der Stift zwischen dem ersten Ende und dem zweiten Ende einen ihn umgebenden Teller aufweisen, der an einem Freiraum zwischen der Aufnahme und dem Verriegelungsteil verschieblich gelagert ist. Ein umgebender Teller liegt in diesen Ausführungsformen auf dem Verriegelungsteil auf, wobei das erste Ende des Stiftes in der Herzkurve aufgenommen ist. Bei einem Verlagern des Führungselementes, sowohl in Querrichtung entlang der Führung als auch in der Herzkurve, wird ein Blockieren oder Verkanten des Führungselementes verhindert, da der Teller ein Verkippen des Stiftes verhindert.

Das Verriegelungsteil, das Führungselement und/oder die Aufnahme können aus einem Kunststoff und/oder Metall bestehen. Kunststoffteile lassen sich einfach in einem Spritzgussverfahren herstellen und reduzieren die Kosten zur Herstellung der Einrichtung sowie die Gesamtkosten für die Einrichtung. Metallteile sorgen für eine robuste Ausführung der Einrichtung.

Das Verriegelungsteil kann an mindestens einer Seite Führungsmittel aufweisen, über welche das Verriegelungsteil an mindestens einem korrespondierenden Führungsmittel der Aufnahme verschiebbar ist. Über die Führungsmittel wird ein Verkanten des Verriegelungsteils verhindert. Die Führungsmittel können zudem mit einem reibungsreduzierenden Material oberflächenbeschichtet oder so ausgebildet sein, dass die Oberfläche der Führungsmittel reibungsreduzierend ist (bspw. Struktur).

Insbesondere kann die Schräge des Verriegelungsteils gegenüber einer Verschiebeebene einen Winkel von 15° bis 50° (insbesondere im Bereich von 45°) aufweisen.

Der Winkel ist jedoch abhängig von der zweiten Weite des Abschnitts des Verriegelungsteils, welcher im geschlossenen Zustand der Komponente aus der Aufnahme hervorsteht, und von weiteren Maßen der Einrichtung, sowie den Maßen der Komponente. Es können auch wesentlich steilere Winkel vorgesehen sein, wobei dann der Bereich des Verriegelungsteils, welcher im geschlossenen Zustand der Komponente aus der Aufnahme hervorsteht, eine geringere Größe aufweist.

Das Führungselement kann ferner mit einem Bügel verbunden sein, welcher entlang und quer zu einem die Aufnahme begrenzenden Rückteil verlagerbar ist.

Weiterbildungen der Erfindung sowie Ausgestaltungsmöglichkeiten ergeben sich aus der nachfolgenden Figurenbeschreibung. Die in den Figuren gezeigten Ausführungsbeispiele weisen beispielhaften Charakter auf und sind daher nicht einschränkend zu verstehen und können bei zu implementierenden Ausführungsformen vom Veranschaulichten abweichen.

In den Zeichnungen zeigen:
- Fig. 1: eine perspektivische Ansicht einer Einrichtung mit einem "Push-Push"-Mechanismus in schematischer Darstellung;
- Fig. 2a - 2k: eine schematische Darstellung der Verlagerung zum Verbringen einer Einrichtung mit einem "Push-Push"-Mechanismus;
- Fig. 3: eine Explosionszeichnung einer zweiten Ausführungsform einer Einrichtung mit einem "Push-Push"-Mechanismus;
- Fig. 4: eine dritte Ausführungsform einer Einrichtung mit einem "Push-Push"-Mechanismus; und
- Fig. 5: eine vierte Ausführungsform einer Einrichtung mit einem "Push-Push"-Mechanismus.

In den Figuren entsprechen mit den gleichen Bezugszeichen versehene Teile im Wesentlichen einander, solange nichts anderes angegeben ist. Ferner wird im Folgenden darauf verzichtet, Bestandteile anzugeben und zu beschreiben, welche nicht wesentlich für das Verständnis der hier offenbarten technischen Lehre sind.

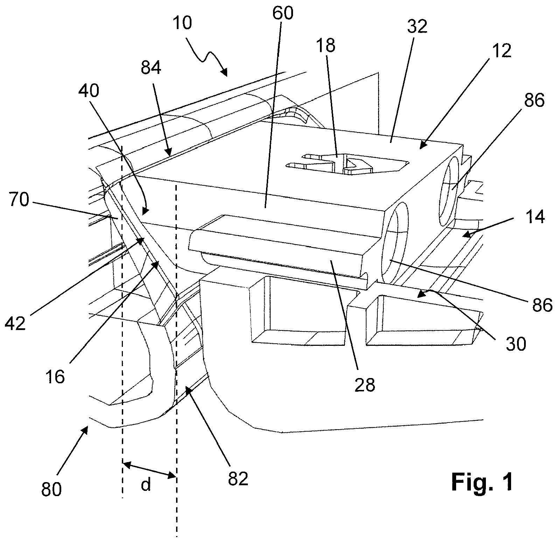

Fig. 1 zeigt eine perspektivische Ansicht einer Einrichtung 10 mit einem "Push-Push"-Mechanismus in schematischer Darstellung. Die Einrichtung ist in dem in Fig. 1 gezeigten Ausführungsbeispiel Bestandteil einer Verriegelungseinrichtung für eine verschwenkbare Vorrichtung, welche beispielsweise ein Fach oder eine Ablage aufweist.

Eine Klappe 80 weist eine Komponente 70 auf, wobei die Komponente 70 integraler Bestandteil der Klappe 80 ist. Die Komponente 70 weist eine Komponentenaufnahme 16 auf. Die Komponentenaufnahme 16 erstreckt sich über die Komponente 70 hinaus bis zu einer ersten Kante 82. Ferner erstreckt sich die Komponentenaufnahme 16 bis zu einer zweiten Kante 84. Die erste Kante 82 verläuft versetzt zu der zweiten Kante 84. Die erste Kante 82 weist einen Abstand d zu der zweiten Kante 84 auf.

Die Klappe 80 ist um eine nicht dargestellte Achse verschwenkbar. Diese Achse befindet sich links von der Komponente 70. In der Komponentenaufnahme 16 ist ein Verriegelungsteil 12 aufgenommen. Das Verriegelungsteil 12 ist in einer Aufnahme 14 gelagert. Die Aufnahme 14 weist Führungen 30 auf. Das Verriegelungsteil 12 weist Führungsleisten 28 auf, die in den Führungen 30 aufgenommen sind. Über die Führungsleisten 28 ist das Verriegelungsteil in der Aufnahme 14 verschieblich geführt.

Die Komponentenaufnahme 16 weist eine Schräge 42 und das Verriegelungsteil 12 eine korrespondierende Schräge 40 auf. An der der Schräge 40 gegenüberliegenden Rückwand weist das Verriegelungsteil 12 zwei Öffnungen 86 auf, in welchen Federn (in Fig. 1 nicht dargestellt) aufgenommen sind, welche bestrebt sind, das Verriegelungsteil 12 aus der Aufnahme 14 herauszudrücken. Ferner weist das Verriegelungsteil eine Herzkurve 18 auf, in welcher ein Stift 92 (in Fig. 1 nicht dargestellt) aufgenommen ist. Der Stift 92 ist so angeordnet, dass er nur parallel zu den Kanten 82 und 84 verlagert werden kann.

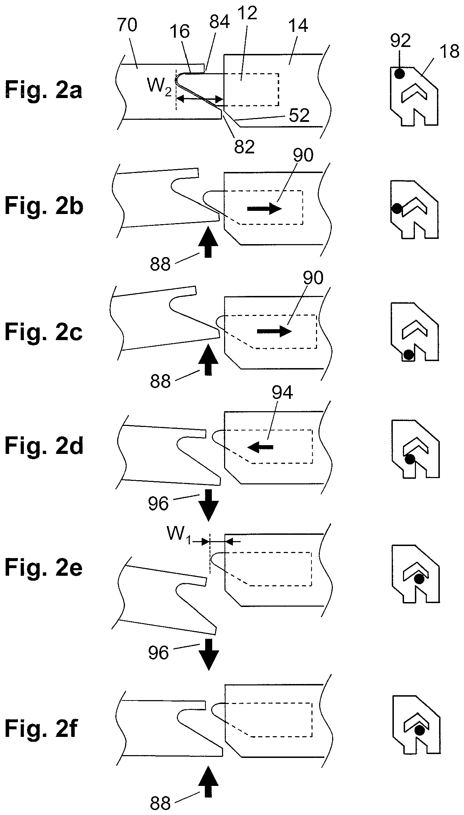

Wird von unten Druck auf die Klappe 80 ausgeübt, wird das Verriegelungsteil 12 gegen die Kraft der Federn in die Aufnahme 14 geschoben. Hierbei wird der Stift 92 (siehe Fig. 2a - 2k) aus einer Anlageposition in der Herzkurve 18 in eine Verriegelungsposition verbracht. Nachdem der Stift 92 in die Anlageposition und das Verriegelungsteil 12 in die Aufnahme 14 verbracht worden sind, steht das Verriegelungsteil 12 um eine erste Weite W₁ aus der Aufnahme 14 hervor. Die Klappe 80 kann dann nach unten klappen oder bewegt werden, da die zweite Kante 84 beim Passieren des Verriegelungsteils 12 nicht mit dieser in Kontakt kommt.

Soll die Klappe 80 wieder geschlossen und verriegelt werden, so wird die Klappe 80 von unten gegen das Verriegelungsteil 12 gedrückt, wobei die zweite Kante 84 das Verriegelungsteil 12 ohne Kontakt zu diesem passiert. Wird die Klappe 80 weiter nach oben gedrückt, passiert die erste Kante 82 das Verriegelungsteil 12 und drückt das Verriegelungsteil 12 in die Aufnahme 14, da das Verriegelungsteil um die erste Weite W₁ aus der Aufnahme 14 hervorsteht. Der Stift 92 wird dabei aus seiner Anlageposition verbracht und gibt eine Verlagerung des Verriegelungsteils 12 frei, wobei das Verriegelungsteil 12 durch die Federn aus der Aufnahme 14 gedrückt wird und in die Komponentenaufnahme 16 gelangt. Danach ist die Klappe 80 wieder durch die Einrichtung 10 verriegelt und kann durch erneutes Drücken von unten entriegelt werden.

Die Fig. 2a - 2k zeigen eine schematische Darstellung der Verlagerung der Elemente einer Einrichtung mit einem "Push-Push"-Mechanismus.

In den Fig. 2a - 2k ist ein Teil einer Komponente 70 mit einer Komponentenaufnahme 16 dargestellt. Eine zweite Kante 84 der Komponentenaufnahme 16 ragt nicht so weit nach rechts in Richtung einer Aufnahme 14 wie eine erste Kante 82 der Komponentenaufnahme 16. In der Komponentenaufnahme 16 ist ein Verriegelungsteil 12 im Wesentlichen vollständig aufgenommen, wobei vollständig sich darauf bezieht, dass die Komponentenaufnahme 16 vollständig durch den in die Komponentenaufnahme 16 ragenden Teil des Verriegelungsteils 12 ausgefüllt bzw. das Verriegelungsteil eingerastet ist.

Das Verriegelungsteil 12 ist ferner über Führungsmittel in der Aufnahme 14 verschieblich gelagert. Die Aufnahme 14 ist in den Fig. 2a-k nur teilweise und schematisch dargestellt. Das Verriegelungsteil 12 ragt in Fig. 2a um eine zweite Weite W₂ aus der Aufnahme 14 hervor und blockiert damit ein Verschwenken der Komponente 70 um einen sich links von der Komponente 70 befindende(n) Drehpunkt oder Drehachse. Die Aufnahme 14 weist an ihren unteren Abschnitten Schrägen 52 auf, die verhindern sollen, dass die Komponente 70 beim Öffnen oder Schließen an der Aufnahme 14 anstößt oder durch die Aufnahme 14 blockiert wird.

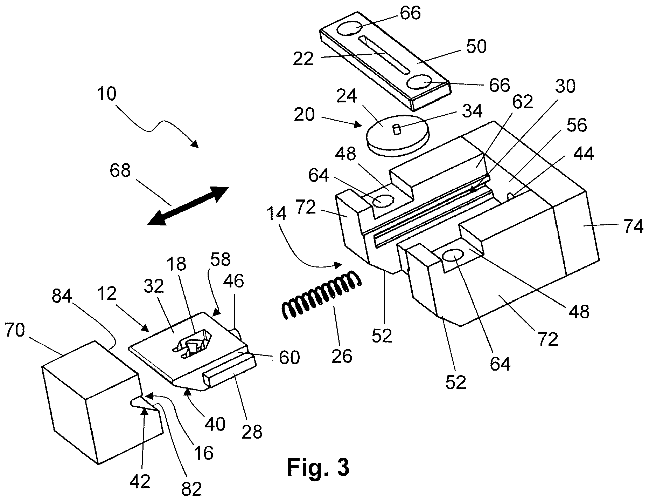

Das Verriegelungsteil 12 weist an seiner Oberseite 32 (siehe Fig. 1, 3 - 5) eine Herzkurve 18 auf. In der Herzkurve ist ein Stift 92 geführt, welcher entlang einer Führungsplatte 50 (siehe Fig. 3 - 5) orthogonal zur Längsachse des Verriegelungsteils 12 verlagerbar ist.

Über der Aufnahme 14 kann eine Abdeckung angeordnet sein, welche ein Verschwenken der Komponente 70 nach oben in Richtung der Pfeile 88 begrenzt.

In den Fig. 2a - 2k sind neben der Darstellung der Komponente 70 und der Aufnahme 14 mit dem Verriegelungsteil 12 die Herzkurve 18 und die Position des Stifts 92 in der Herzkurve 18 schematisch dargestellt. Die Position des Stifts 92 entspricht im Wesentlichen der Position des Verriegelungsteils 12 in der Aufnahme 14.

In Fig. 2a befindet sich die Komponente 70 in einem verriegelten Zustand. Das Verriegelungsteil 12 ragt um die zweite Weite W₂ aus der Aufnahme 14 und ist in der Komponentenaufnahme 16 aufgenommen. Der Stift 92 befindet sich in der dargestellten Position.

Um die Komponente 70 von dem geschlossenen Zustand aus Fig. 2a in einen geöffneten Zustand zu verbringen, wird von unten Druck auf die Komponente 70, wie durch Pfeil 88 in Fig. 2b dargestellt, aufgebracht. Aufgrund der Schräge 42 der Komponentenaufnahme 16 und der Schräge 40 (siehe Fig. 1, 3 - 5) des Verriegelungsteils 12 wird hierbei das Verriegelungsteil 12 nach rechts in Richtung des Pfeils 90 gegen die Kraft einer in den Fig. 2a - 2k nicht dargestellten Feder in die Aufnahme 14 geschoben. Der Stift 92 befindet sich hierbei in der dargestellten Position.

Wird auf die Komponente 70 weiter Druck in Richtung des Pfeils 88 ausgeübt, wie in Fig. 2c dargestellt, wird das Verriegelungsteil 12 weiter in die Aufnahme 14 geschoben. In Fig. 2c befindet sich der Stift 92 an einem Endpunkt, welcher ein weiteres Verschieben des Verriegelungsteils 12 in die Aufnahme 14 verhindert.

Anschließend wird der Druck auf die Komponente 70 aufgegeben, wobei sich das Verriegelungsteil 12 durch die Feder in Richtung des Pfeils 94 nach links bewegt (Fig. 2d). Da die zweite Kante 84 der Komponentenaufnahme 16 nicht so weit in Richtung der Aufnahme 14 ragt wie die erste Kante 82 und nachdem das Verriegelungsteil 12 nicht mehr in der Komponentenaufnahme 16 aufgenommen ist, bewegt sich die Komponente 70 in Richtung des Pfeils 96 nach unten. Der Stift 92 befindet sich in der dargestellten Position.

In Fig. 2e befindet sich das Verriegelungsteil 12 in einer entriegelten Stellung und wird über den Stift 92 in dieser Stellung gehalten, wobei die Komponente 70 weiter nach unten bewegt und damit geöffnet wird. Das Verriegelungsteil 12 ragt in der entriegelten Stellung um eine erste Weite W₁ aus der Aufnahme 14 heraus. Das Verriegelungsteil 12 ist zwischen den Fig. 2c bis 2e um ein geringes Maß durch die Feder aus der Aufnahme 14 heraus bewegt worden. Jedoch ist durch die erste Weite W₁ sichergestellt, dass die zweite Kante 84 der Komponentenaufnahme 16 beim Passieren des Verriegelungsteils 12 nicht mit dem Verriegelungsteil 12 in Kontakt kommt.

Um die Komponente 70 wieder in den geschlossenen Zustand zu verbringen, wird die Komponente 70 in Richtung des Pfeils 88 nach oben bewegt. Fig. 2f ist hierbei deutlich zu entnehmen, dass die zweite Kante 84 beim Passieren des Verriegelungsteils 12 ausreichend beabstandet zu diesem ist. Der Stift 92 befindet sich in Fig. 2f immer noch in der verriegelten Stellung.

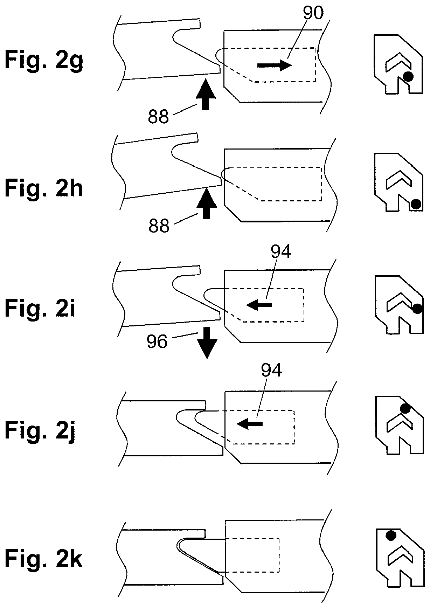

Wird der Druck auf die Komponente 70 in Richtung des Pfeils 88 weiter aufrecht erhalten, kommt die erste Kante 82 der Komponentenaufnahme 16 in Kontakt mit dem Verriegelungsteil 12, wobei durch den Druck das Verriegelungsteil 12 gegen die Kraft der Feder in Richtung des Pfeils 90 in die Aufnahme 14 geschoben wird (Fig. 2g). Der Stift 92 befindet sich hierbei in der dargestellten Position.

In Fig. 2h ist der maximal ausgeschwenkte Zustand der Komponente 70 nach oben dargestellt. Das Verriegelungsteil 12 ist so weit in der Aufnahme 14 aufgenommen, dass es nicht weiter in die Aufnahme 14 hineingeschoben werden kann. Über den Stift 92, der sich in einer weiteren Endposition befindet, wird ein weiteres Hineinschieben verhindert.

Anschließend wird kein Druck mehr in Richtung des Pfeils 88 auf die Komponente 70 aufgebracht. Die Komponente 70 bewegt sich dann in Richtung des Pfeils 96 nach unten und das Verriegelungsteil 12 wird durch die Feder in Richtung des Pfeils 94 aus der Aufnahme 14 gedrückt (Fig. 2i). Der Stift 92 befindet sich in der dargestellten Position.

Das Verriegelungsteil 12 wird durch die Feder weiter in Richtung des Pfeils 94 aus der Aufnahme 14 herausgeschoben, wobei das Verriegelungsteil 12 hierbei in die Komponentenaufnahme 16 bewegt wird (Fig. 2j). Der Stift 92 befindet sich dabei in der dargestellten Position.

In Fig. 2k ist der verriegelte Zustand der Komponente 70 dargestellt, welcher dem Zustand von Fig. 2a entspricht.

Fig. 3 zeigt eine Explosionszeichnung einer zweiten Ausführungsform mit einem "Push-Push"-Mechanismus. Eine Einrichtung 10 weist ein Verriegelungsteil 12 auf, welches in einer Aufnahme 14 aufgenommen ist und in eine Komponentenaufnahme 16 eingreifen kann. Die Aufnahme 14 wird in Fig. 3 durch zwei Seitenteile 72 und ein Rückteil 74 gebildet. Die Aufnahme 14 kann beispielsweise Teil eines Rahmens sein, der ein Fach umgibt, wobei die Komponente 70 eine Klappe zum Verschließen des Faches ist. Die Aufnahme 14 kann auch in anderen Vorrichtungen integriert sein, welche mit einer Komponente 70, die ebenfalls verschiedenartig ausgebildet sein kann, zusammenwirkt. Die Seitenteile 72 und das Rückteil 74 können dementsprechend in einem Rahmen integriert oder Teile des Rahmens sein.

Die Komponentenaufnahme 16 ist in einer schematisch angedeuteten Komponente 70 eingebracht. Die Seitenteile 72 weisen jeweils innenliegend auf den Seiten 62, welche die Aufnahme 14 begrenzen, eine Führung 30 auf. Die Führung 30 ist jeweils so ausgebildet, dass in der Führung 30 aufgenommene Führungsleisten 28 des Verriegelungsteils 12 verschoben werden können, jedoch das Verriegelungsteil 12 nicht vollständig aus der Aufnahme 14 im zusammengebauten Zustand herausbewegt werden kann. Die Rückwand 56 des Rückteils 74 weist eine Öffnung 44 auf, in welcher teilweise eine Feder 26 aufgenommen ist. Das gegenüberliegende Ende der Feder 26 ist auf einen Zapfen 46 aufgeschoben. Der Zapfen 46 befindet sich auf der Rückseite 58 des Verriegelungsteils 12. Die Führungsleisten 28 (in Fig. 3 nur eine Führungsleiste 28 dargestellt) befinden sich auf den gegenüberliegenden Seiten 60 des Verriegelungsteils 12. Das Verriegelungsteil 12 wird über die Feder 26 aus der Aufnahme 14 herausgedrückt, wird jedoch über die Führungen 30 und die Führungsleisten 28 stets in der Aufnahme 14 gehalten.

Die Seitenteile 72 weisen ferner Ausbuchtungen 48 auf, in welchen Öffnungen 64 eingebracht sind. In die Ausnehmungen 48 wird eine Führungsplatte 50 so eingesetzt, dass die Öffnungen 64 der Ausnehmungen 48 mit Öffnungen 66 einer Führungsplatte 50 fluchten. Über die Öffnungen 64 und 66 kann die Führungsplatte 50 beispielsweise mittels Schrauben oder Bolzen mit den Seitenteilen 72 verbunden werden. Bevor jedoch die Führungsplatte 50 mit den Seitenteilen 72 verbunden wird, wird ein Führungselement 20 so auf das Verriegelungsteil 12 aufgesetzt, dass ein unteres stiftförmiges Ende in die auf der Oberfläche 32 des Verriegelungsteils 12 eingebrachte Herzkurve 18 eingreift. Der das Führungselement 20 umgebende Teller 24 liegt mit seiner unteren Fläche auf der Oberfläche 32 des Verriegelungsteils 12 auf. Das obere Ende 34 des in diesem Abschnitt stiftförmig ausgebildeten Führungselementes 20 ist innerhalb einer Führung 22 der Führungsplatte 50 verschieblich gelagert.

Das Verriegelungsteil 12 weist am vorderen Ende eine Schräge 40 auf, welche korrespondierend zu einer Schräge 42 der Komponentenaufnahme 16 der Komponente 70 ausgebildet ist. Im geschlossenen Zustand der Komponente 70 befindet sich das Verriegelungsteil 12 in der Komponentenaufnahme 16, wobei die Schräge 40 an der Schräge 42 anliegt.

In diesem Zustand (siehe Fig. 2a, 2k) befindet sich das untere Ende des Führungselementes 20 in dem Bereich der Herzkurve 18, welcher am nächsten der Rückseite 58 liegt.

Zum Öffnen der Komponente 70 bzw. zum Verbringen in den geöffneten Zustand wird im Wesentlichen im Bereich der Komponentenaufnahme 16 von unten auf die Komponente 70 gedrückt, wobei aufgrund der Schräge 42 der Komponentenaufnahme 16 und der Schräge 40 des Verriegelungsteils 12 eine Verlagerung des Verriegelungsteils 12 entlang der Führung 30 in Richtung der Rückwand 56 innerhalb der Aufnahme 14 erfolgt (siehe Verschieberichtung 68; Fig. 2b, 2c) .

Hierbei erfolgt zugleich eine Verlagerung des Führungselementes 20 entlang der Führung 22, wobei aufgrund der Herzkurve 18 das untere Ende des Führungselementes 20 gegenüber seinem Ausgangszustand in den entgegengesetzten Bereich der Herzkurve 18 verlagert wird. Bei der in Fig. 3 gezeigten Ausführung wird das untere Ende des stiftförmigen Führungselements 20 entlang des Bereichs der Herzkurve 18 hin zu der der Komponente 70 zugewandten Ausbuchtung geführt (Fig. 2c), welche sich in Blickrichtung auf Fig. 3 am weitesten von der dargestellten Führungsleiste 28 entfernt befindet. Das Verlagern des Verriegelungsteils 12 erfolgt gegen die Kraft der Feder 26, so dass zum Verbringen der Komponente 70 in den geöffneten Zustand ein bestimmter Druck auf die Komponente 70 erforderlich ist.

Ist die Komponente 70 in den geöffneten Zustand verbracht worden, wobei diese nach unten verschwenkt ist (in Fig. 3 nicht dargestellt), wird kein Druck mehr auf das Verriegelungsteil 12 ausgeübt, wodurch die Feder 26 das Verriegelungsteil 12 wieder aus der Aufnahme 14 herausdrückt. Hierbei gelangt das untere Ende des Führungselementes 20 in den mittleren Abschnitt der Herzkurve 18 und wird von dem im Wesentlichen V-förmig ausgebildeten Bereich gehalten (siehe Fig. 2e, 2f). In dieser Position steht das Verriegelungsteil 12 nur um ein bestimmtes Maß, erste Weite W₁, aus der Aufnahme 14 hervor.

Wird nun die Komponente 70 wieder in den geschlossenen Zustand verbracht, so wird die Komponente 70 im Wesentlichen von unten gegen das Verriegelungsteil 12 gedrückt, wobei die zweite Kante 84 das Verriegelungsteil 12 passiert (Fig. 2f) und die erste Kante 82 der Komponentenaufnahme 16 das Verriegelungsteil 12 in die Aufnahme 14 gegen die Kraft der Feder 26 drückt (Fig. 2g, 2h), welches ein Verlagern des unteren Endes des Führungselementes 20 aus dem V-förmigen Bereich der Herzkurve 18 bewirkt, wobei das untere Ende des Führungselementes 20 in den vorderen Abschnitt der Herzkurve 18 (der Rückseite 58 abgewandt) gelangt (siehe Fig. 2h). Die Verlagerung des unteren Endes des Führungselements 20 erfolgt über den schrägen Bereich zwischen den Ausbuchtungen in der Herzkurve 18, welche das Führungselement 20 in Blickrichtung auf Fig. 3 nach unten führt. Von dieser Ausbuchtung aus gelangt das untere Ende des Führungselements 20 aufgrund des Drucks der Feder 26 bei einem weiteren Verlagern zurück in die Ausgangsstellung (Fig. 2a, 2k).

Bei einer Verlagerung der Komponente 70 nach unten bewegt sich die vordere Kante des Verriegelungsteils 12 in die Komponentenaufnahme 16 hinein, bis die vordere Kante des Verriegelungsteils 12 durch die Feder 26 automatisch in die Komponentenaufnahme 16 vollständig gedrückt worden ist. Durch das Verlagern des Verriegelungsteils 12 in die Komponentenaufnahme 16 wird das untere Ende des Führungselementes 20 über die mit Blick auf Fig. 3 untere Bahn der Herzkurve 18 wieder zurück in die Ausgangsstellung gebracht, wobei das Verriegelungsteil 12 in seiner am weitesten ausgefahrenen Position (zweite Weite W₂) aus der Aufnahme 14 zum Stehen kommt. Hierbei liegt die Schräge 40 des Verriegelungsteils 12 an der Schräge 42 der Komponentenaufnahme 16 an.

Soll die Komponente 70 nun wieder aus dem geschlossenen in den geöffneten Zustand verbracht werden, so reicht ein leichtes Drücken von unten auf die Komponente 70 im Bereich der Komponentenaufnahme 16, so dass sich der oben beschriebene Vorgang wiederholt.

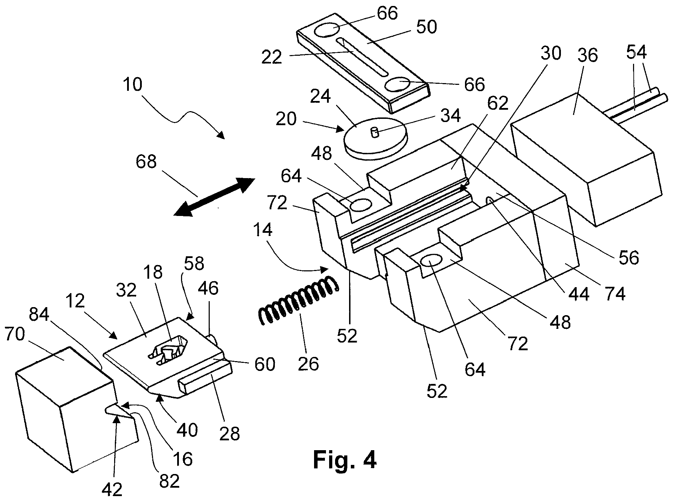

Fig. 4 zeigt eine weitere, dritte Ausführungsform einer Einrichtung 10, wobei zusätzlich ein Elektromagnet 36 vorgesehen ist. Anders als bei der in Fig. 3 dargestellten Einrichtung 10 ist das Verriegelungsteil 12 bei der in Fig. 4 dargestellten Ausführungsform aus einem magnetischen Metall gefertigt oder weist zumindest ein magnetisches Metall auf, so dass das Verriegelungsteil 12 von dem Elektromagneten 36 magnetisch angezogen werden kann.

Die anderen dargestellten Bestandteile sind entsprechend der in Fig. 3 dargestellten Ausführung ausgebildet und miteinander verbunden. Über den Elektromagneten 36 kann eine Verlagerung des Verrieglungsteils 12 erfolgen, wobei die verschiedenen Weiten (insbesondere erste Weite W₁, zweite Weite W₂), in wieweit das Verriegelungsteil 12 aus der Aufnahme 14 hervorsteht, bedingt durch die Position des unteren Endes des Führungselementes 20 in der Herzkurve 18, durch den Elektromotor veränderbar sind. Hierbei muss kein Drücken auf die Komponente 70 erfolgen, um ein Verbringen der Komponente 70 aus dem geöffneten in den geschlossenen Zustand und umgekehrt zu erreichen. Der Elektromagnet 36 weist Anschlussleitungen 54 auf, welche zur Steuerung bzw. Stromversorgung des Elektromagneten 36 dienen.

Bei der in Fig. 4 gezeigten dritten Ausführungsform kann bei einem Ausfall der Stromversorgung oder der Steuerung für den Elektromagneten 36 ein manuelles Öffnen und Schließen erfolgen, da durch den Druck auf die Komponente 70 ein Verbringen in den geöffneten und geschlossenen Zustand, wie mit Bezug auf Fig. 3 beschrieben, erfolgen kann.

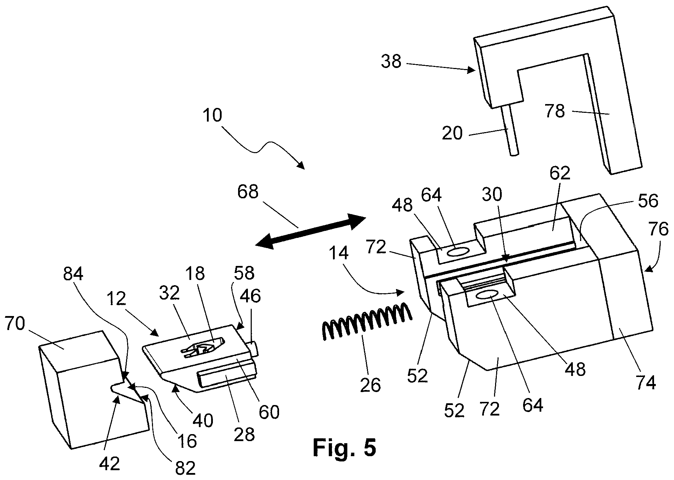

Fig. 5 zeigt eine weitere, vierte Ausführungsform, wobei anstelle eines Führungselementes 20 gemäß Fig. 3, welches aus einer Scheibe bzw. einem Teller 24 und einem konzentrischen Stift 34 besteht, ein stiftförmiges Führungselement 20 an einem Bügel 38 angebracht ist, der mit seinem Schenkel 78 an der Rückwand 76 des Rückteils 74 anliegt. Ein Verkanten (beispielsweise durch eine leichte Schrägstellung des Führungselementes 20) wird aufgrund des Bügels 38 und des Anliegens des Schenkels 78 an der Rückwand 76 ausgeschlossen. Daher kann auf eine Führungsplatte 50 verzichtet werden, wobei jedoch bei der in Fig. 5 gezeigten Ausführungsform eine Führungsplatte 50 zusätzlich vorgesehen sein kann.

Die in den Fig. 1 bis 5 gezeigten Ausführungsformen weisen den Vorteil auf, dass sie relativ wenig Bauraum benötigen und aus wenigen Komponenten eine zuverlässige und langlebige Einrichtung 10 zum Verbringen einer Komponente 70 in den geöffneten und geschlossenen Zustand angeben. Die Schräge 40 sowie die Schräge 42 können entsprechend der Verwendung der Einrichtung 10 ausgebildet sein. Daher kann die Schräge 40 einen wesentlich steileren oder flacheren Winkel (entsprechend die korrespondierende Schräge 42) aufweisen, als in den Fig. 1 bis 5 dargestellt. Im Gegensatz zu bisher bekannten Systemen bietet eine Ausbildung eines "Push-Push"-Mechanismus mit einer Einrichtung 10 (Fig. 1 bis 5) den Vorteil, dass keine Haken verwendet werden, welche in eine Herzkurve eingebracht werden müssen oder einen Ausschnitt oder eine Ausnehmung hintergreifen. Bei der hier offenbarten technischen Lehre wird lediglich das Verriegelungsteil 12 mit relativ kurzen Hüben in die Aufnahme 14 verbracht oder aus dieser herausbewegt.

Die Schrägen 52 der Seitenteile 72 sind für das Verschwenken der Komponente 70 nicht maßgeblich. Daher können die Seitenteile 72 auch einen geraden Abschluss aufweisen. Ferner kann die Aufnahme 14, anders als in den Fig. 1 bis 5 dargestellt, anstelle zweier Seitenteile 72 und eines Rückteils 74 einstückig ausgebildet sein.

**Bezugszeichenliste**

| | | | |
|---|---|---|---|
| 10 | Einrichtung | 60 | Seite |
| 12 | Verriegelungsteil | 62 | Seite |
| 14 | Aufnahme | 64 | Öffnung |
| 16 | Komponentenaufnahme | 66 | Öffnung |
| 18 | Herzkurve | 68 | Verschieberichtung |
| 20 | Führungselement | 70 | Komponente |
| 22 | Führung | 72 | Seitenteil |
| 24 | Teller | 74 | Rückteil |
| 26 | Feder | 76 | Rückwand |
| 28 | Führungsleiste | 78 | Schenkel |
| 30 | Führung | 80 | Klappe |
| 32 | Oberseite | 82 | erste Kante |
| 34 | zweites Ende | 84 | zweite Kante |
| 36 | Elektromagnet | 86 | Öffnung |
| 38 | Bügel | 88 | Pfeil |
| 40 | Schräge | 90 | Pfeil |
| 42 | Schräge | 92 | Stift |
| 44 | Öffnung | 94 | Pfeil |
| 46 | Zapfen | 96 | Pfeil |
| 48 | Ausbuchtung | d | Abstand |
| 50 | Führungsplatte | W₁ | erste Weite |
| 52 | Schräge | W₂ | zweite Weite |
| 54 | Anschlussleitung | | |
| 56 | Rückwand | | |
| 58 | Rückseite | | |

## Patentansprüche

1. Einrichtung (10), aufweisend einen Mechanismus zum Verbringen einer Komponente aus einem geöffneten in einen geschlossenen Zustand und umgekehrt durch Drücken auf die Komponente, wobei die Einrichtung eine Aufnahme (14), eine Komponentenaufnahme (16) und ein Verriegelungsteil (12) aufweist, welches in der Aufnahme (14) verschieblich gelagert und in einem geöffneten Zustand der Komponente um eine erste Weite (W₁) aus der Aufnahme (14) hervorsteht und in einem geschlossenen Zustand um eine zweite Weite (W₂) aus der Aufnahme (14) hervorsteht und in der Komponentenaufnahme (16) aufgenommen ist, wobei die zweite Weite (W₂) größer ist als die erste Weite (W₁), wobei das Verriegelungsteil (12) gegen die Kraft einer Federeinrichtung in der Aufnahme (14) aufgenommen ist und das Verriegelungsteil (12) eine Herzkurve (18) aufweist, in welcher ein Führungselement (20) verschieblich gelagert ist, welches quer zu der Verschieberichtung (68) des Verriegelungsteils (12) verlagerbar ist, und wobei das Verriegelungsteil (12) an der der Aufnahme (14) abgewandten Seite eine Schräge (40) und die Komponentenaufnahme (16) eine korrespondierende Schräge (42) aufweisen, welche im geschlossenen Zustand der Komponente aneinander anliegen und zueinander verschieblich sind, wobei eine erste Kante (82) der Komponentenaufnahme (16) versetzt zu einer zweiten Kante (84) der Komponentenaufnahme (16) verläuft.

2. Einrichtung (10) nach Anspruch 1, aufweisend eine quer zu der Verschieberichtung (68) des Verriegelungsteils (12) verlaufende Führung (22), in welcher das Führungselement (20) verschiebbar ist.

3. Einrichtung (10) nach Anspruch 1 oder 2, wobei die Federeinrichtung mindestens eine Druckfeder aufweist.

4. Einrichtung (10) nach Anspruch 1 oder 2, wobei die Federeinrichtung mindestens zwei Dauermagnete aufweist, wobei ein Dauermagnet in der Aufnahme (14) und der andere Dauermagnet an dem Verriegelungsteil (12) angeordnet und die Dauermagnete so zueinander ausgerichtet sind, dass sie sich abstoßen.

5. Einrichtung (10) nach einem der Ansprüche 1 bis 3, aufweisend einen Elektromagneten (36), wobei das Verriegelungsteil (12) aus einem magnetischen Metall besteht und das Verriegelungsteil (12) durch den Elektromagneten (36) in die Aufnahme (14) bewegbar ist, wenn der Elektromagnet (36) aktiviert ist.

6. Einrichtung (10) nach einem der Ansprüche 1 bis 5, wobei das Führungselement (20) ein Stift (92) ist und ein erstes Ende des Stifts (92) in der Herzkurve (18) verschieblich gelagert und das zweite Ende (34) des Stifts (92) in der quer verlaufenden Führung (22) verschieblich gelagert ist.

7. Einrichtung (10) nach einem der Ansprüche 1 bis 5, wobei das Führungselement eine Kugel ist.

8. Einrichtung (10) nach Anspruch 6, wobei der Stift zwischen dem ersten Ende und dem zweiten Ende (34) einen ihn umgebenden Teller (24) aufweist, der in einem Freiraum zwischen der Aufnahme (14) und dem Verriegelungsteil (12) verschieblich gelagert ist.

9. Einrichtung (10) nach einem der Ansprüche 1 bis 8, wobei das Verriegelungsteil (12), das Führungselement (20) und/oder die Aufnahme (14) aus Kunststoff und/oder Metall bestehen.

10. Einrichtung (10) nach einem der Ansprüche 1 bis 9, wobei das Verriegelungsteil (12) an mindestens einer Seite (60) Führungsmittel (28) aufweist, über welche das Verriegelungsteil (12) an mindestens einem korrespondieren Führungsmittel (30) der Aufnahme (14) verschiebbar ist.

11. Einrichtung (10) nach einem der Ansprüche 1 bis 10, wobei die Schräge (40) des Verriegelungsteils (12) gegenüber einer Verschiebeebene einen Winkel von 15° bis 50° aufweist.

12. Einrichtung (10) nach einem der Ansprüche 1 bis 5 und 9 bis 11, wobei das Führungselement (20) mit einem Bügel (38) verbunden ist, welcher entlang und quer zu einem die Aufnahme (14) begrenzenden Rückteil (74) verlagerbar ist.

## Claims

1. Device (10) comprising a mechanism for bringing a component from an open state to a closed state and conversely by pressing on the component, wherein the device comprises a receptacle (14), a component receiver (16) and a locking part (12), which is displaceably mounted in the receptacle (14) and in an open state of the component protrudes by a first width (W₁) from the receptacle (14) and in a closed state protrudes by a second width (W₂) from the receptacle (14) and is received in the component receiver (16), wherein the second width (W₂) is greater than the first width (W₁), wherein the locking part (12) is mounted in the receptacle (14) against the force of a spring device and the locking part (12) has a heart cam (18) in which a guide element (20) is displaceably mounted, the guide element being displaceable transversely to the displacement direction (68) of the locking part (12), and wherein the locking part (12) has a chamfer (40) at the side remote from the receptacle (14) and the component receiver (16) has a corresponding chamfer (42), which chamfers in the closed state of the component bear against and are displaceable relative to one another, wherein a first edge (82) of the component receiver (16) extends at an offset with respect to a second edge (84) of the component receiver (16).

2. Device (10) according to claim 1, comprising a guide (22) which extends transversely to the displacement direction (68) of the locking part (12) and in which the guide element (20) is displaceable.

3. Device (10) according to claim 1 or 2, wherein the spring device comprises at least one compression spring.

4. Device (10) according to claim 1 or 2, wherein the spring device comprises at least two permanent magnets, wherein one permanent magnet is arranged in the receptacle (14) and the other permanent magnet is arranged at the locking part (12) and the permanent magnets are so oriented relative to one another that they mutually repel.

5. Device (10) according to any one of claims 1 to 3, comprising an electromagnet (36), wherein the locking part (12) consists of a magnetic metal and the locking part (12) is movable by the electromagnet (36) into the receptacle (14) when the electromagnet (36) is activated.

6. Device (10) according to any one of claims 1 to 5, wherein the guide element (20) is a pin (92) and a first end of the pin (92) is displaceably mounted in the heart cam (18) and the second end (34) of the pin (92) is displaceably mounted in the transversely extending guide (22).

7. Device (10) according to any one of claims 1 to 5, wherein the guide element is a ball.

8. Device (10) according to claim 6, wherein the pin has between the first end and the second end (34) a plate (24) which surrounds it and which is displaceably mounted in a free space between the receptacle (14) and the locking part (12).

9. Device (10) according to any one of claims 1 to 8, wherein the locking part (12), the guide element (20) and/or the receptacle (14) consists or consist of plastics and/or metal.

10. Device (10) according to any one of claims 1 to 9, wherein the locking part (12) has at at least one side (60) guide means (28) by way of which the locking part (12) is displaceable at at least one corresponding guide means (30) of the receptacle (14).

11. Device (10) according to any one of claims 1 to 10, wherein the chamfer (40) of the locking part (12) has an angle of 15° to 50° relative to a displacement plane.

12. Device (10) according to any one of claims 1 to 5 and 9 to 11, wherein the guide element (20) is connected with a bracket (38) which is displaceable along and transversely to a back part (74) bounding the receptacle (14).

## Revendications

1. Dispositif (10), présentant un mécanisme servant à amener un composant depuis un état ouvert dans un état fermé et inversement en appuyant sur le composant, dans lequel le dispositif présente un logement (14), un logement de composant (16) et une partie de verrouillage (12), laquelle est montée de manière à pouvoir coulisser dans le logement (14) et fait saillie hors du logement (14) sur une première largeur (W₁) dans un état ouvert du composant et fait saillie hors du logement (14) d'une deuxième largeur (W₂) dans un état fermé et est logée dans le logement de composant (16), dans lequel la deuxième largeur (W₂) est plus grande que la première largeur (W₁), dans lequel la partie de verrouillage (12) est logée dans le logement (14) à l'encontre de la force d'un dispositif à ressort et la partie de verrouillage (12) présente une cardioïde (18), dans laquelle un élément de guidage (20) est monté de manière à pouvoir coulisser, lequel peut être déplacé de manière transversale par rapport à la direction de coulissement (68) de la partie de verrouillage (12), et dans lequel la partie de verrouillage (12) présente au niveau du côté opposé au logement (14) un chanfrein (40) et le logement de composant (16) présente un chanfrein (42) correspondant, lesquels reposent l'un au niveau de l'autre dans l'état fermé du composant et peuvent être coulissés l'un par rapport à l'autre, dans lequel une première arête (82) du logement de composant (16) s'étend de manière décalée par rapport à une deuxième arête (84) du logement de composant (16).

2. Dispositif (10) selon la revendication 1, présentant un guidage (22) s'étendant de manière transversale par rapport à la direction de coulissement (68) de la partie de verrouillage (12), dans lequel l'élément de guidage (20) peut être coulissé.

3. Dispositif (10) selon la revendication 1 ou 2, dans lequel le dispositif à ressort présente au moins un ressort de pression.

4. Dispositif (10) selon la revendication 1 ou 2, dans lequel le dispositif à ressort présente au moins deux aimants permanents, dans lequel un aimant permanent est disposé dans le logement (14) et l'autre aimant permanent, au niveau de la partie de verrouillage (12) et les aimants permanents sont orientés l'un par rapport à l'autre de telle sorte qu'ils se repoussent.

5. Dispositif (10) selon l'une quelconque des revendications 1 à 3, présentant un électroaimant (36), dans lequel la partie de verrouillage (12) est constituée d'un métal magnétique et la partie de verrouillage (12) peut être déplacée par l'électroaimant (36) dans le logement (14) quand l'électroaimant (36) est activé.

6. Dispositif (10) selon l'une quelconque des revendications 1 à 5, dans lequel l'élément de guidage (20) est une tige (92) et une première extrémité de la tige (92) est montée de manière à pouvoir coulisser dans la cardioïde (18) et la seconde extrémité (34) de la tige (92) est montée de manière à pouvoir coulisser dans le guidage (22) s'étendant de manière transversale.

7. Dispositif (10) selon l'une quelconque des revendications 1 à 5, dans lequel l'élément de guidage est une bille.

8. Dispositif (10) selon la revendication 6, dans lequel la tige présente entre la première extrémité et la seconde extrémité (34) une rondelle (24) entourant celle-ci, qui est montée de manière à pouvoir coulisser dans un espace dégagé entre le logement (14) et la partie de verrouillage (12).

9. Dispositif (10) selon l'une quelconque des revendications 1 à 8, dans lequel la partie de verrouillage (12), l'élément de guidage (20) et/ou le logement (14) sont constitués d'une matière plastique et/ou de métal.

10. Dispositif (10) selon l'une quelconque des revendications 1 à 9, dans lequel la partie de verrouillage (12) présente au niveau d'au moins un côté (60) des moyens de guidage (28), par l'intermédiaire desquels la partie de verrouillage (12) peut être coulissée au niveau d'au moins un moyen de guidage (30) correspondant du logement (14).

11. Dispositif (10) selon l'une quelconque des revendications 1 à 10, dans lequel le chanfrein (40) de la partie de verrouillage (12) présente par rapport à un plan de coulissement un angle allant de 15° à 50°.

12. Dispositif (10) selon l'une quelconque des revendications 1 à 5 et 9 à 11, dans lequel l'élément de guidage (20) est relié à un étrier (38), lequel peut être déplacé le long de et de manière transversale par rapport à une partie arrière (74) délimitant le logement (14).
